# EUROPÄISCHE PATENTSCHRIFT

(11) **EP 3 216 333 B1**
(45) Veröffentlichungstag und Bekanntmachung des Hinweises auf die Patenterteilung: **13.11.2019**
(21) Anmeldenummer: 16203238.7
(22) Anmeldetag: 09.12.2016
(51) Int. Cl.: A01B 59/042, B60T 7/20, B60T 13/08

(54) **LANDWIRTSCHAFTLICHER ZUG MIT EINEM ZUGFAHRZEUG UND ANHÄNGER**
AGRICULTURAL TRAIN COMPRISING A TOWING VEHICLE AND A TRAILER
TRACTEUR AGRICOLE COMPRENANT UN VÉHICULE TRACTEUR ET UNE REMORQUE

(30) Priorität: 11.03.2016 DE 102016104453
(43) Veröffentlichungstag der Anmeldung: 13.09.2017
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Gohde, Thomas, 33181 Bad Wünnenberg (DE); Andrade, Mikael, 59700 Marq en Baroeul (FR); Ehlert, Christian, 33719 Bielefeld (DE)
(74) Vertreter: CLAAS Gruppe

(56) Entgegenhaltungen:
- EP-A1- 2 269 880
- WO-A1-2015/104168
- DE-A1- 10 327 564
- DE-A1-102005 027 846
- DE-A1-102013 100 793

## Beschreibung

Die vorliegende Erfindung betrifft einen landwirtschaftlichen Zug mit einem Zugfahrzeug und mindestens einem Anhänger.

Landwirtschaftliche Arbeitsmaschinen wie Traktoren werden neben der reinen Feldarbeit auch oft für Transportaufgaben eingesetzt, bei denen beispielsweise auf Anhänger verladenes Erntegut transportiert wird. Dabei werden üblicherweise ein oder mehr Anhänger von einem Zugfahrzeug gezogen und bilden dabei einen sogenannten landwirtschaftlichen Zug. Mit der zunehmenden Größe und Leistungsfähigkeit der Arbeitsmaschinen steigt auch die Möglichkeit, größere und schwerer beladene Anhänger zu ziehen, wobei die zulässigen Höchstgeschwindigkeiten, die landwirtschaftliche Arbeitsmaschinen im öffentlichen Straßenverkehr fahren dürfen, ebenfalls ansteigen. Anhänger weisen oftmals eine sogenannte Auflaufbremse auf, welche auf eine oder mehrere Achsen wirkt. Bei der Auflaufbremse wird bei einem Auflaufen des Anhängers auf das Zugfahrzeug, also bei einer Verzögerung des Zugfahrzeuges, automatisch die Bremsanlage des auflaufenden Anhängers betätigen, so dass dieser durch die anhängerseitigen Bremsen ebenfalls verzögert wird. Hierbei kann es bauartbedingt jedoch zu kurzen zeitlichen Verzögerungen bis zum Ansprechen der Auflaufbremse kommen, wodurch kritische Fahrsituationen entstehen können. So kann beispielsweise ein stark bremsendes Zugfahrzeug bis zum Ansprechen der Auflaufbremse des Anhängers durch diesen geschoben und bereits in einen instabilen Fahrzustand gebracht werden.

Um dies zu vermeiden, ist aus der DE 20315755 U1 bekannt, eine Bremse eines Anhängers in Abhängigkeit einer Freigabe eines Gaspedals des Zugfahrzeuges zu aktivieren. Hierbei soll eine Anhängerbremsanlage betätigt werden, wenn beispielsweise der Fahrer des Zugfahrzeuges den Fuß vom Gaspedal nimmt und das Zugfahrzeug beispielsweise durch ein Schleppmoment des Antriebsmotors verzögert wird. Durch die Aktivierung der Anhängerbremsanlage wird der Anhänger ebenfalls verzögert und ein Aufschieben des Anhängers auf das Zugfahrzeug kann zumindest vermindert werden. Nachteilig ist hierbei jedoch, dass die Bremsanlage des Anhängers bei jeder Geschwindigkeit, beispielsweise beim Rollen, des Zugfahrzeuges aktiviert werden kann, wodurch es zu kritischen Fahrzuständen des Gespanns kommen kann, beispielsweise zu einer unerwarteten Abbremsung des Anhängers bei einer Kurvenfahrt.

Weiterhin sind fremdkraftgebremste Anhänger bekannt, bei denen mit der Betätigung der Bremsanlage des Zugfahrzeugs, beispielsweise dessen Betriebsbremse, ein Bremssignal an die Anhängerbremsanlage gesendet wird, um diese zu betätigen. Hierbei wird zwar die Anhängerbremsanlage betätigt, jedoch ist dies nur in Verbindung mit betätigter Betriebsbremse des Traktors möglich, so dass gegen die betätigten Bremsen des Zugfahrzeuges und des Anhängers gefahren werden muss. Zudem bleibt bei einer Verzögerung des Zugfahrzeuges durch das Motorschleppmoment des Antriebsmotors dieses Bremssignal aus, wodurch keine Bremsung des Anhängers erfolgt, so dass dieser auf das Zugfahrzeug schiebt und die Gefahr besteht, dass die Achsen des Zugfahrzeuges überbremst werden, wodurch die Fahrstabilität des Zugfahrzeuges deutlich verringert werden kann.

Bei Zugfahrzeugen mit stufenlosem Getriebe, welches eine stufenlose Änderung der Getriebeübersetzung ohne Unterbrechung des Kraftschlusses ermöglicht, kann eine starke Verzögerung des Zugfahrzeuges allein über eine Verstellung von Motordrehzahl und Getriebeübersetzung bewirkt werden, wodurch das Gefahrenpotential aufgrund der Überbremsung des Zugfahrzeuges durch Schieben des Anhängers noch vergrößert wird.

Die Dokumente EP 2 269 880 A1 und WO 2015/104168 A1 beschreiben bekannte landwirtschaftliche Züge mit Zugfahrzeugen und daran gekoppelten Anhängern bzw. Verfahren zur Betätigung mindestens einer Bremsanlage der landwirtschaftlichen Züge.

Es ist daher die Aufgabe der Erfindung, einen landwirtschaftlichen Zug mit einem Zugfahrzeug und mindestens einem Anhänger bereitzustellen, welcher eine Verbesserung der Fahrsicherheit bietet. Weiterhin ist es die Aufgabe der Erfindung, ein Verfahren anzugeben, welches eine Verbesserung der Fahrsicherheit eines landwirtschaftlichen Zugs ermöglicht.

Die Aufgabe wird erfindungsgemäß durch die kennzeichnenden Merkmale der unabhängigen Patentansprüche 1 und 9 gelöst. Vorteilhafte Ausgestaltungen und Weiterbildungen der Erfindung ergeben sich aus den nachstehenden Unteransprüchen und den nachfolgenden Beschreibungen.

Ein landwirtschaftlicher Zug umfasst ein Zugfahrzeug, insbesondere einen Traktor, und mindestens einen an das Zugfahrzeug gekoppelten Anhänger, wobei der mindestens eine Anhänger eine erste Bremsanlage aufweist, und wobei das Zugfahrzeug, welches über einen mit einem Getriebe zusammenwirkenden Antriebsmotor antreibbar ist, eine zweite Bremsanlage und eine Steuervorrichtung zur Steuerung und/oder Regelung zumindest einer Bremsanlage des landwirtschaftlichen Zugs aufweist. Gemäß der Erfindung ist die Steuervorrichtung derart ausgebildet und eingerichtet, dass mindestens eine Bremsanlage des Zuges in Abhängigkeit eines ermittelten Schubbetriebes des Zuges und/oder Zugfahrzeuges betätigbar ist, wobei der Schubbetrieb in Abhängigkeit mindestens eines Betriebsparameters des landwirtschaftlichen Zuges ermittelbar ist.

Ein Schubbetrieb des Zugfahrzeuges bezeichnet den Fahrzustand des Zugfahrzeuges, bei dem der Antriebsmotor des Zugfahrzeuges durch das Zugfahrzeug geschleppt wird, der Antriebsmotor also in Drehbewegung gehalten wird, beispielsweise bei einem Rollen des Zugfahrzeuges und/oder landwirtschaftlichen Zuges ohne Betätigung eines Fahrpedals. Durch den Schubbetrieb des Zugfahrzeuges kann eine Verzögerung des landwirtschaftlichen Zuges bewirkt werden, welche beispielsweise durch eine Verstellung der Drehzahl des Antriebsmotors des Zugfahrzeuges und/oder eine Verstellung der Getriebeübersetzung verstärkbar ist.

Basierend auf mindestens einem Betriebsparameter des Zugfahrzeuges und/oder des landwirtschaftlichen Zuges kann das Auftreten eines Schubbetriebs zuverlässig und ohne große Verzögerung ermittelt werden. Beispielsweise sind der Schubbetrieb und/oder dessen Größe, insbesondere das Schubmoment, durch die Steuereinrichtung basierend auf mindestens einem Betriebsparameter ermittelbar. In Abhängigkeit des ermittelten Schubbetriebs, und insbesondere der Größe des Schubmomentes, ist durch die Steuervorrichtung mindestens eine Bremsanlage des landwirtschaftlichen Zuges, beispielsweise eine Anhängerbremsanlage, betätigbar, um den Schubbetrieb zu vermindern oder zu vermeiden. Dabei kann die Steuervorrichtung zur Betätigung, also der Steuerung und/oder Regelung, einer Bremsanlage ein entsprechendes Bremssignal generieren, welches an die zu betätigende Bremsanlage geleitet wird. Eine erfindungsgemäße Betätigung einer oder mehrerer Bremsanlagen des landwirtschaftlichen Zuges erfolgt dabei unabhängig von Bremseingriffen eines möglicherweise vorhandenen Anti-Blockier-Systems (ABS) und/oder elektronischen Stabilitäts-Programmes (ESP), welches beispielsweise zeitgleich mit dem Betätigen einer Bremsanlage durch die Steuervorrichtung wirken kann, um ein Blockieren der Bodeneingriffsmittel des Zuges zu vermeiden. Zur Betätigung einer oder mehrerer Bremsanlagen kann, beispielsweise in der Steuervorrichtung, ein Grenzwert für die Größe des Schubbetriebes oder des Schubmomentes hinterlegt sein, mit dem der jeweils ermittelte Wert verglichen werden kann. Bei Erreichen oder Überschreiten des Grenzwertes, bei oder ab dem ein kritischer Fahrzustand des Zugfahrzeuges und/oder des Zuges angenommen werden kann, kann durch Betätigung einer oder mehrerer Bremsanlagen der Schubbetrieb vermieden oder auf einen Wert kleiner als der Grenzwert vermindert werden. Eine Betätigung einer oder mehrerer Bremsanlagen, insbesondere Anhängerbremsanlagen, gemeinsam oder unabhängig voneinander durch die Steuervorrichtung kann derart erfolgen, dass eine Verzögerung des mindestens einen Anhängers gleichgroß oder größer ist als eine Verzögerung des Zugfahrzeuges, wodurch der landwirtschaftliche Zug gestreckt wird. Dabei wird die Verzögerung nicht mehr nur durch das Zugfahrzeug erzeugt, sondern zusätzlich, insbesondere überwiegend, von dem nun gebremsten mindestens einen Anhänger.

Dies hat den Vorteil, dass mindestens eine Bremsanlage des landwirtschaftlichen Zuges, insbesondere eine Anhängerbremsanlage, im kritischen Schubbetrieb automatisch von der Steuervorrichtung ansteuerbar ist, wodurch eine selbsttätige Stabilisierung eines landwirtschaftlichen Zuges auch bei besonders kritischer Verzögerung ohne Betätigung einer Bremsanlage des Zugfahrzeuges ermöglicht wird. Eine erste Bremsanlage eines oder mehrerer Anhänger sind dabei unabhängig von einer zweiten Bremsanlage des Zugfahrzeuges betätigbar. Hierdurch kann die Fahrsicherheit des landwirtschaftlichen Zuges und insbesondere des Zugfahrzeuges verbessert werden. Zudem kann in einer Fahrsituation, in der der landwirtschaftliche Zug allein durch das Schleppmoment des Antriebsmotors abgebremst wird, ein Überdrehen und eine Beschädigung des Antriebsmotors vermieden werden.

Vorzugsweise ist ein Betriebsparameter eine auf das oder an dem Zugfahrzeug wirkende Kraft, ein Moment, eine Motordrehzahl, ein Getriebeparameter und/oder ein Schlupf von Bodeneingriffsmitteln des Zuges. Die jeweiligen Betriebsparameter können durch für jeweils hierfür geeignete Sensoren, beispielsweise Kraft-, Drehmoment-, Druck-und/oder Drehzahlsensoren, ermittelt werden, welche mit der Steuervorrichtung verbindbar sind. Eine auf das Zugfahrzeug wirkende Kraft kann beispielsweise eine in einem Schubbetrieb von dem Anhänger auf das Zugfahrzeug übertragene Kraft, insbesondere Druckkraft, sein. Weiterhin kann ein an Bodeneingriffsmitteln des Zuges auftretender Schlupf, insbesondere in Verbindung mit auftretenden Radkräften und/oder Radmomenten als Betriebsparameter ermittelt und genutzt werden, welcher Aufschluss über die Kraftübertragung des Traktors und/oder Anhängers auf die Straße geben kann. Durch die Ermittlung des Schubbetriebs und/oder dessen Größe anhand eines oder mehrerer Betriebsparameter kann eine Betätigung einer Bremsanlage zuverlässiger und präziser erfolgen.

Ein Getriebeparameter ist ein an dem, insbesondere stufenlosen, Getriebe wirkendes Abtriebsdrehmoment und/oder Stützmoment. Das Getriebe kann ein Lastschaltgetriebe oder stufenloses Getriebe sein. Ein stufenloses Getriebe kann in Form eines leistungsverzweigten hydraulisch-mechanischen, eines elektrisch-mechanischen, eines rein hydraulischen oder eines rein elektrischen Getriebes ausgebildet sein. Unter einem rein elektrischen Getriebe ist dabei eine elektrisch gesteuerte Kombination aus einem Generator und mindestens einem Elektromotor zu verstehen. Ein hydraulisch-mechanisches leistungsverzweigtes stufenloses Getriebe kann beispielsweise ein sogenanntes CVT Getriebe sein, welches einen hydrostatischen und einen mechanischen Getriebeteil zur Leistungsübertragung aufweist. CVT ist dabei die Abkürzung des englischen Fachbegriffes Continuously Variable Transmission. Ein hydraulisch-mechanisches stufenloses Getriebe kann dabei Hydrostaten in Weitwinkelbauweise aufweisen. Bei einem hydraulisch-mechanischen stufenlosen Getriebe kann mittels geeigneter Sensorik das Abtriebsdrehmoment, dessen Größe und/oder Richtung, als Getriebeparameter ermittelt werden. Das ermittelte Abtriebsdrehmoment kann genutzt werden, um Schubbetrieb zu erkennen, beispielsweise in Abhängigkeit der Richtung des Abtriebsdrehmomentes, und in Abhängigkeit der Größe des Abtriebsdrehmomentes im Schubbetrieb die erste Bremsanlage anzusteuern. Bei einem mechanischen oder hydrostatischen stufenlosen Getriebe und/oder einem Lastschaltgetriebe kann beispielsweise das Stützmoment des Getriebes als Getriebeparameter ermittelt werden. Das Stützmoment, welches beispielsweise von einer Drehzahl des Antriebsmotors, einer Getriebeübersetzung und/oder einem Getriebewirkungsgrad abhängig ist, kann mittels einer Kennlinie, insbesondere einer Schleppkennlinie, bestimmt werden. Vorteilhaft bei derartigen Getriebeparametern ist die Möglichkeit der Nutzung bereits vorhandener Bauteile und/oder einer kostengünstigen Nachrüstung einzelner Sensoren, welche eine einfache und zuverlässige Bestimmung der Betriebsparameter ermöglicht.

In einer besonders bevorzugten Ausgestaltung der Erfindung ist das Abtriebsdrehmoment eines stufenlosen Getriebes aus einer Druckdifferenz in einem hydrostatischen Teilgetriebe des Getriebes bestimmbar. Das stufenlose Getriebe kann dabei in Form eines hydrostatischen oder hydraulisch-mechanischen stufenlosen Getriebes ausgebildet sein. Das hydraulisch-mechanische stufenlose Getriebe weist dabei eine Leistungsverzweigung auf, bei der je nach Betriebspunkt jeweils ein Teil der Leistung hydrostatisch und/oder mechanisch übertragen wird. In dem hydrostatischen Teilgetriebe des Getriebes kann die Leistungsübertagung mittels hydraulisch verbundener Hydrostaten, insbesondere Weitwinkelbauweise mit erhöhtem Schwenkbereich, erfolgen, wobei ein Hydrostat als Pumpe und mindestens ein weiterer Hydrostat als Motor wirkt. Mittels einer Sensorik, beispielsweise Drucksensoren, an den die Hydrostaten verbindenden Hydraulikleitungen kann eine Druckdifferenz zwischen zwei die Hydrostaten verbindenden Hydraulikleitungen gemessen werden. Aus dieser Druckdifferenz sind mit Kenntnis der Schwenkwinkel der Hydrostaten die Größe und/oder die Richtung des Abtriebsdrehmomentes als Betriebsparameter auf kostengünstige Weise zuverlässig bestimmbar.

Vorteilhafterweise ist die Bremsanlage eines Anhängers durch die Steuervorrichtung zu bestimmbaren Zeitpunkten und für bestimmbare Dauer betätigbar. Ein Zeitpunkt und/oder eine Dauer zur Betätigung einer Bremsanlage sind dabei durch die Steuervorrichtung bestimmbar. Hierbei können durch die Steuervorrichtung vorgegebene Parameter, beispielsweise aufgrund gesetzlicher Regelungen, berücksichtigt werden. Dies können beispielsweise Grenzwerte zur Größe des Schubbetriebes sein, ab dem eine Betätigung einer Bremsanlage erfolgt oder Vorgaben zur Dauer der Betätigung. Dies ermöglicht eine effektive Betätigung einer Bremsanlage und eine Verbesserung der Fahrsicherheit, da ein Bremseingriff besser an unterschiedliche Fahrsituationen anpassbar ist.

In einer vorteilhaften Ausgestaltung der Erfindung sind bei einem Zug mit mehreren bremsbaren Anhängern die Bremsanlagen der Anhänger gleichzeitig und/oder unabhängig voneinander betätigbar. Die Bremsanlagen können dabei unabhängig voneinander, beispielsweise alternierend, betätigbar sein, wodurch eine Überlastung einer Bremsanlage vermieden werden kann.

In einer besonders bevorzugten Ausgestaltung der Erfindung sind an einem Anhänger angeordnete Bodeneingriffsmittel durch die zugeordnete Bremsanlage gemeinsam, achsweise und/oder einzeln bremsbar. Bodeneingriffsmittel stützen den Anhänger gegenüber dem Boden ab und können in Form von Rädern oder Raupenlaufwerken ausgebildet sein, welche an ein oder mehreren Achsen des Anhängers angeordnet sein können. Hierbei ist von Vorteil, dass der Bremseingriff genauer und besser an die jeweilige Fahrsituation angepasst erfolgen kann, wodurch die Fahrsicherheit in unterschiedlichen Fahrsituationen weiter verbessert werden kann.

Vorteilhafterweise erfolgt eine Betätigung mindestens einer Bremsanlage des Zuges in Abhängigkeit einer Anzahl der Anhänger, der Anhängerart, des jeweiligen Anhängergewichtes und/oder der jeweiligen Anhängerbremsleistung. Diese Daten sind in der Steuervorrichtung hinterlegbar und können beispielsweise manuell oder automatisch eingebbar sein. Dies ermöglicht einen besser auf die jeweilige Fahrsituation abgestimmte Betätigung einer Bremsanlage, wodurch die Fahrsicherheit weiter erhöht werden kann.

In einer weiteren vorteilhaften Ausgestaltung der Erfindung ist eine Geschwindigkeitsregelanlage vorgesehen, welche mit der Steuervorrichtung in Signalverbindung steht. Durch die Geschwindigkeitsregelanlage kann eine Geschwindigkeit des Zugfahrzeuges, damit auch des Zuges, konstant gehalten und/oder automatisch, beispielsweise ortsabhängig, variiert werden. Durch die Signalverbindung zwischen Steuervorrichtung und Geschwindigkeitsregelanlage wird das Anpassen eines Bremseingriffes an die gefahren und/oder einzustellende Geschwindigkeit ermöglicht. Dies hat den Vorteil, dass auch bei Fahrt mit aktivierter Geschwindigkeitsregelanlage ein automatisches Betätigen einer oder mehrerer Bremsanlagen des Zuges zur Vermeidung eines kritischen Schubbetriebs ermöglicht wird.

Weiterhin betrifft die Erfindung ein Verfahren zur Betätigung mindestens einer Bremsanlage eines landwirtschaftlichen Zuges mit einem Zugfahrzeug, insbesondere einem Traktor, und mindestens einem an das Zugfahrzeug gekoppelten Anhänger, wobei der mindestens eine Anhänger eine erste Bremsanlage aufweist, und wobei das Zugfahrzeug, welches über einen mit einem, insbesondere stufenlosen, Getriebe zusammenwirkenden Antriebsmotor antreibbar ist, eine zweite Bremsanlage und eine Steuervorrichtung zur Steuerung und/oder Regelung mindestens einer Bremsanlage des landwirtschaftlichen Zugs aufweist. Gemäß der Erfindung betätigt die Steuervorrichtung mindestens eine Bremsanlage des Zuges in Abhängigkeit eines ermittelten Schubbetriebes des Zuges und/oder Zugfahrzeuges, wobei der Schubbetrieb in Abhängigkeit mindestens eines Betriebsparameters des landwirtschaftlichen Zuges ermittelt wird, wobei der mindestens eine Betriebsparameter ein Getriebeparameter in Form eines an dem, insbesondere stufenlosen, Getriebe wirkenden Abtriebsdrehmomentes und/oder Stützmomentes ist.

Basierend auf mindestens einem Betriebsparameter des Zugfahrzeuges und/oder des landwirtschaftlichen Zuges kann das Auftreten eines Schubbetriebs zuverlässig ermittelt werden, wobei der Schubbetrieb und/oder dessen Größe, insbesondere das Schubmoment, durch die Steuereinrichtung basierend auf mindestens einem Betriebsparameter ermittelbar ist. In Abhängigkeit des ermittelten Schubbetriebs, und insbesondere der Größe des Schubmomentes, ist durch die Steuervorrichtung mindestens eine Bremsanlage des landwirtschaftlichen Zuges, beispielsweise eine Bremsanlage eines Anhängers, betätigbar, um den Schubbetrieb zu vermindern oder zu vermeiden. Dabei kann die Steuervorrichtung zur Betätigung, also der Steuerung und/oder Regelung, einer Bremsanlage ein entsprechendes Bremssignal generieren, welches an die zu betätigende Bremsanlage geleitet wird. Dies hat den Vorteil, dass mindestens eine Bremsanlage des landwirtschaftlichen Zuges, insbesondere eine Bremsanlage eines Anhängers, im kritischen Schubbetrieb automatisch von der Steuervorrichtung ansteuerbar ist, wodurch eine selbsttätige Stabilisierung eines landwirtschaftlichen Zuges auch bei besonders kritischer Verzögerung ohne Betätigung einer Bremsanlage des Zugfahrzeuges ermöglicht wird. Durch dieses sogenannte Strecken des Zuges, kann die Fahrsicherheit des landwirtschaftlichen Zuges und insbesondere des Zugfahrzeuges verbessert werden. Zudem kann in einer Fahrsituation, in der der landwirtschaftliche Zug allein durch das Schleppmoment des Antriebsmotors abgebremst wird, ein Überdrehen und eine Beschädigung des Antriebsstranges und/oder des Antriebsmotors vermieden werden.

In einer bevorzugten Weiterbildung des Verfahrens wird als ein Betriebsparameter eine auf das oder an dem Zugfahrzeug wirkende Kraft, ein Moment, eine Motordrehzahl und/oder ein Schlupf von Bodeneingriffsmitteln des Zuges verwendet. Die jeweiligen Betriebsparameter können mittels jeweils hierfür geeigneten Sensoren, beispielsweise Kraft-, Drehmoment-, Druck-, Drehrichtungs- und/oder Drehzahlsensoren, ermittelt werden. Vorteilhaft ist dabei, dass durch die Ermittlung des Schubbetriebs und/oder dessen Größe anhand eines oder mehrerer Betriebsparameter eine Betätigung einer Bremsanlage zuverlässiger und präziser erfolgen kann.

In einer besonders bevorzugten Weiterbildung des Verfahrens wird ein Getriebeparameter in Form eines an einem hydraulisch-mechanischen stufenlosen Getriebe wirkenden Abtriebsdrehmomentes aus einer Druckdifferenz in einem hydrostatischen Teilgetriebe des Getriebes bestimmt. Das hydraulisch-mechanische stufenlose Getriebe ist leistungsverzweigt und weist neben einem mechanischen ein hydrostatisches Teilgetriebe zur Leistungsübertragung auf. In dem hydrostatischen Teilgetriebe sind zur variablen Leistungsübertragung mindestens zwei Hydrostaten angeordnet, die mittels Hydraulikleitungen verbunden sind. Mittels Drucksensoren an den Hydraulikleitungen kann eine Druckdifferenz zwischen den Leitungen zur Bestimmung des Schubbetriebs ermittelt werden. Das Vorliegen eines Schubbetriebs kann aus der Richtung des Abtriebsdrehmomentes ermittelt werden, welches ebenfalls aus der Druckdifferenz zwischen den Hydraulikleitungen zwischen den Hydrostaten ermittelbar ist. Dies kann besonders durch eine Umkehr der Druckdifferenz bestimmt werden, beispielsweise wenn der Druck einer ersten Hydraulikleitung im Zugbetrieb größer als der Druck einer zweiten Hydraulikleitung ist und sich dies umkehrt, so dass dann der Druck in der zweiten Leitung größer ist als in der ersten Leitung und dann Schubbetrieb vorliegt. Das ermittelte Abtriebsdrehmoment entspricht dann dem Schubmoment. Dies bietet den Vorteil, dass aus dem ermittelten Abtriebsdrehmoment das Vorliegen von Schubbetrieb bestimmt werden kann und in Abhängigkeit der Größe des Abtriebsdrehmomentes im Schubbetrieb mindestens eine, insbesondere die erste, Bremsanlage angesteuert werden kann. Vorteilhaft ist hierbei die Nutzung bereits vorhandener Bauteile und/oder eine mögliche kostengünstige Nachrüstung einzelner Sensoren, welche eine einfache und zuverlässige Bestimmung der Betriebsparameter ermöglicht.

Weitere Merkmale und Vorteile der Erfindung ergeben sich aus der nachfolgenden Beschreibung eines Ausführungsbeispiels unter Bezugnahme auf die beigefügten Figuren.

Es zeigen:
- Fig. 1:: eine schematische Darstellung eines landwirtschaftlichen Zuges mit einem Zugfahrzeug und einem daran gekoppelten Anhänger; und
- Fig. 2:: eine schematische Darstellung des landwirtschaftlichen Zugfahrzeuges aus Fig. 1 mit einem hydraulisch-mechanischen leistungsverzweigten stufenlosen Getriebe.

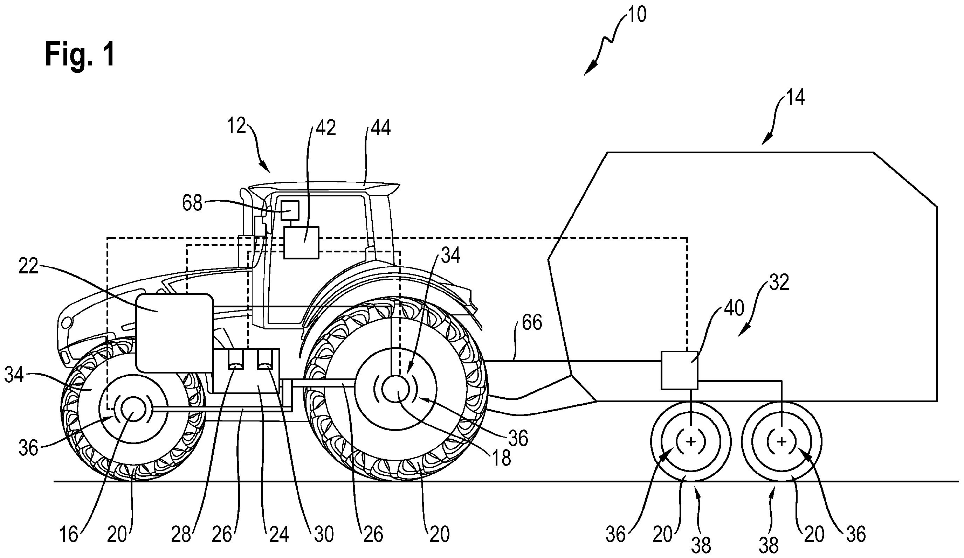

In Figur 1 ist als Beispiel für einen landwirtschaftlichen Zug 10 ein Zugfahrzeug 12 in Form eines Traktors mit einem daran angeordneten Anhänger 14 in einer schematischen Seitenansicht dargestellt. Ein Zugfahrzeug 12 im Sinne der Erfindung kann jede landwirtschaftliche Arbeitsmaschine wie ein Feldhäcksler, ein Mähdrescher oder ein Traktor mit oder ohne angebautem Arbeitsgerät sein. Dabei sind auch angehängte, insbesondere aufgesattelte, Anbaugeräte im Sinne der vorliegenden Erfindung als Anhänger 14 zu verstehen. Das Zugfahrzeug 12 ist gegenüber dem Boden durch jeweils an einer Vorderachse 16 und einer Hinterachse 18 angeordnete Bodeneingriffsmittel 20 in Form von Rädern abgestützt. Die Bodeneingriffsmittel 20 können auch in Form von Raupenlaufwerken ausgebildet sein. Zum Antrieb der Bodeneingriffsmittel 20 und als Energiequelle für Arbeitsgeräte weist das Zugfahrzeug 12 einen Antriebsmotor 22 auf, welcher über ein Getriebe 24 mit einem Antriebsstrang 26 verbunden ist.

Über den Antriebsstrang 26 und/oder Antriebsmotor 22 kann regelbar die Antriebsleistung bereitgestellt werden, die beispielsweise für eine Feldbearbeitung und/oder eine Straßenfahrt des Zugfahrzeuges 12 benötigt wird, wobei ein von dem Antriebsmotor 22 erzeugtes Drehmoment über den Antriebsstrang 26 auf die Vorder- und/oder Hinterachse 16, 18 übertragen werden kann.

Das Übersetzungsverhältnis des Getriebes 24 kann manuell oder automatisch, insbesondere auch unter Last, eingestellt werden. Das Getriebe 24 kann dabei in Form eines Lastschaltgetriebes oder eines stufenlosen Getriebes ausgebildet sein. Bei den stufenlosen Getrieben gibt es unterschiedliche Bauformen, so kann beispielsweise das stufenlose Getriebe in Form eines leistungsverzweigten hydraulisch-mechanischen, eines elektrisch-mechanischen, eines rein hydraulischen oder eines rein elektrischen Getriebes ausgebildet sein.

Das in Figur 1 gezeigte Zugfahrzeug 12 weist ein stufenloses leistungsverzweigtes hydraulisch-mechanisches Getriebes 24 mit einem hydrostatischen Teilgetriebe 48 und einem mechanischen Teilgetriebe 46 zur Leistungsübertragung auf, bei dem ein Teil der Leistung hydrostatisch und ein Teil mechanisch übertragen wird. In dem hydrostatischen Teilgetriebe 48 erfolgt die Leistungsübertagung dabei über einen ersten Hydrostaten 28 und mindestens einen mit diesem hydraulisch verbundenen zweiten Hydrostaten 30, wobei ein Hydrostat 28, 30 als Pumpe und mindestens ein weiterer Hydrostat 30, 28 als Motor wirkt. Die Leistungsverzweigung in dem Getriebe 24 erfolgt über ein Planetengetriebe, wodurch die Kraft des Antriebsmotors 22 in den mechanischen Antrieb der Bodeneingriffsmittel 20 und den hydraulischen einer stufenlos verstellbaren Hydropumpe, beispielsweise in Form des ersten Hydrostaten 28, aufgeteilt wird. Die auf den ersten Hydrostaten 28 übertragene Leistung wird hydraulisch auf den, insbesondere stufenlos verstellbaren, zweiten Hydrostaten 30 übertragen, welcher als Hydraulikmotor wirkt und die übertragene Leistung des hydrostatischen Teilgetriebes 48 zum Antrieb der Räder wieder zur Verfügung stellt. Das Übersetzungsverhältnis des Getriebes 24 wird dabei über das stufenlos verstellbare hydrostatische Teilgetriebe 48 geregelt. Die Hydrostaten 28, 30 sind dabei in Weitwinkelbauweise mit erhöhtem Schwenkbereich ausgebildet. Denkbar wäre auch eine Anordnung der Hydrostaten 28, 30 in einer sogenannten back-to-back Anordnung, bei der die Hydrostaten 28, 30 räumlich unmittelbar aneinander angeordnet sind, so dass die beiden Hydrostaten 28, 30, beispielsweise innerhalb eines Gehäuses, direkt hydraulisch miteinander verbunden sind.

Um den landwirtschaftlichen Zug 10 zu verzögern, weist mindestens ein Anhänger 14 eine erste Bremsanlage 32 und das Zugfahrzeug 14 eine zweite Bremsanlage 34 auf. Mehrere Anhänger 14 können jeweils eine eigene Bremsanlage aufweisen. Die Bremsanlage 34 des Zugfahrzeuges kann eine Betriebsbremse, welche beispielsweise durch Betätigung eines Bremspedals durch den Bediener betätigbar ist, eine Feststellbremse und/oder eine Hilfsbremse umfassen. Die Bremsanlagen 32, 34 können jeweils pneumatisch, hydraulisch, mechanisch und/oder elektrisch wirkende Bremsanlagen sein. Die Bremsanlage 32 eines Anhängers 14 umfasst jeweils mindestens eine Bremse 36, welche an auf eine Anhängerachse 38 und/oder auf jeweils ein Bodeneingriffsmittel 20 des Anhängers 14 wirkt. Zudem kann die erste Bremsanlage 32 über mindestens ein elektronisch ansteuerbares Anhängerbremsventil 40 angesteuert werden, wobei das Anhängerbremsventil 40 anhängerseitig oder zugfahrzeugseitig angeordnet sein kann. Mit Bremsleitung 66 wird ein zum Bremsen benötigtes Fluid, beispielsweise Druckluft, von dem Zugfahrzeug 12 zum Anhänger 14 geleitet. Der in Figur 1 dargestellte Anhänger 14 ist mittels einer Deichsel mit dem Zugfahrzeug 12 verbunden und weist zwei Anhängerachsen 38 mit daran angeordneten Bodeneingriffsmitteln 20 auf. An den Anhängerachsen 38 ist jeweils mindestens eine Bremse 36 angeordnet, wobei beispielsweise die Anhängerachsen 38 und/oder die Bodeneingriffsmittel 20 unabhängig voneinander abbremsbar sind.

Die erste Bremsanlage 32 des Anhängers 14 und die zweite Bremsanlage 34 des Zugfahrzeuges 12 sind jeweils mit einer Steuervorrichtung 42 des Zugfahrzeuges 12 zur Steuerung und/oder Regelung der Bremsanlagen 32, 34 verbunden, welche in einer Fahrerkabine 44 des Zugfahrzeuges 12 angeordnet ist. Die Steuervorrichtung 42 ist zudem mit einer Geschwindigkeitsregelanlage 68 verbunden, wodurch eine Betätigung einer Bremsanlage 32, 34 unter Berücksichtigung einer automatischen Geschwindigkeitsregelung durchführbar ist. Das Anhängerbremsventil 40 der ersten Bremsanlage 32 ist dabei zur Betätigung mindestens einer Bremse 36 des Anhängers 14 von der Steuervorrichtung 42 steuer- und regelbar. An der Vorderachse 16 und der Hinterachse 18 des Zugfahrzeuges 12 ist jeweils mindestens eine Bremse 36 angeordnet, wodurch die jeweilige Achse 16, 18 und/oder das jeweilige Bodeneingriffsmittel 20 unabhängig voneinander abbremsbar sind. Die Steuervorrichtung 42 ist weiterhin zum Überwachen, Steuern und/oder Regeln unterschiedlicher Funktionen des landwirtschaftlichen Zuges 10 eingerichtet, insbesondere zur Steuerung und/oder Regelung des Antriebsmotors 22, insbesondere der Antriebsleistung des Antriebsmotors 22, des Getriebes 24 und/oder des Antriebsstranges 26.

Bei einem Verzögern des landwirtschaftlichen Zuges 10, beispielsweise nur durch Verstellen der Motordrehzahl nᵢ und/oder der Getriebeübersetzung wird die gesamte Masse des Zuges 10 durch die Antriebsachse 16, 18 des Zugfahrzeuges 12 abgebremst. Hierbei kann es zu einem Überbremsen der jeweiligen Achse 16, 18 und einem starken Anstieg des Schlupfes kommen, so dass durch das Schieben mindestens eines Anhängers 14 die Fahrstabilität des Zuges 10 verringert wird und es im Extremfall zu einem Einknicken des Zugs 10 kommen kann. Zudem kann durch ein Abbremsen des Zuges 10 durch das Schleppmoment der Antriebsmotor 22 überdreht und beschädigt werden.

Gemäß der Erfindung ist die Steuervorrichtung 42 derart ausgebildet und eingerichtet, dass eine oder mehrere Bremsanlagen 32, 34 des Zuges 10 in Abhängigkeit eines ermittelten Schubbetriebes des Zuges 10 und/oder Zugfahrzeuges 14 betätigbar sind, wobei der Schubbetrieb in Abhängigkeit mindestens eines Betriebsparameters des landwirtschaftlichen Zuges 10 ermittelbar ist. Durch die Betätigung einer Bremsanlage 32, 34 des Zuges, insbesondere der ersten Bremsanlage 32 des Anhängers 14, kann ein Schieben des Anhängers 14 auf das Zugfahrzeug 12 reduziert oder vermieden werden, wodurch eine Beeinträchtigung der Fahrstabilität des Zuges 10 oder ein Überdrehen des Antriebsmotors 22 vermieden werden kann.

Der Schubbetrieb des Zuges 10 wird durch die Steuervorrichtung 42 basierend auf mindestens einem Betriebsparameter ermittelt, wobei ein Betriebsparameter eine auf das oder an dem Zugfahrzeug 12 wirkende Kraft F, ein Moment, eine Motordrehzahl nᵢ, ein Getriebeparameter und/oder ein Schlupf von Bodeneingriffsmitteln 20 des Zuges 10 sein kann. Eine auf das Zugfahrzeug 12 wirkende Kraft F kann beispielsweise mittels eines Kraftmesssensors an einer Kupplung 56 des Zugfahrzeuges 12 gemessen werden, an welcher der Anhänger 14 angehängt ist. Hierdurch kann mit einfachen Mitteln ein Schieben des Anhängers 14 auf das Zugfahrzeug 12, und somit ein Schubbetrieb, ermittelt werden.

Als Betriebsparameter zur Ermittlung des Schubbetriebs ist ebenfalls ein Abtriebsdrehmoment M_{A} des Getriebes 24 nutzbar. Hierbei kann das Vorliegen eines Schubbetriebs an Hand der Richtung des Abtriebsdrehmomentes M_{A} bestimmt werden. Zudem ist die Größe des ermittelten Abtriebsdrehmomentes M_{A} im Schubbetrieb zur Steuerung und/oder Regelung einer ersten Bremsanlage 32 nutzbar, beispielsweise als Grundlage für die Stärke und/oder Dauer deren Betätigung.

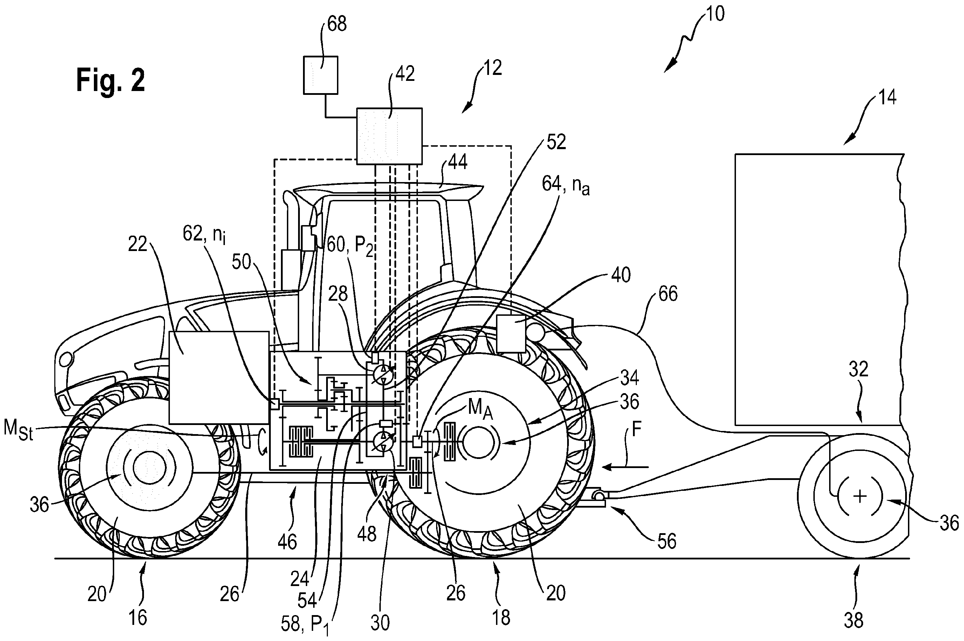

Das in Figur 2 dargestellte Zugfahrzeug 12 in Form eines Traktors weist ein stufenloses leistungsverzweigtes Getriebe 24 mit einem mechanischen Teilgetriebe 46 und einem hydraulischen bzw. hydrostatischen Teilgetriebe 48 auf. Ausgehend von einem in das Getriebe 24 eingehenden Antriebsdrehmoment wird an einer Abtriebswelle des Getriebes 24 ein Abtriebsdrehmoment M_{A} bereitgestellt, welches in Abhängigkeit eines Wirkungsgrades des Getriebes 24 und der Getriebeübersetzung regelbar ist. Zur Verzweigung der in das Getriebe 24 eingehenden Leistung von dem Antriebsmotor 22 weist das Getriebe 22 ein Planetengetriebe 50 auf, durch welches ein Teil der Leistung über das mechanische Teilgetriebe 46 und ein anderer Teil über das hydrostatische Teilgetriebe 48 in den Antriebsstrang 26 eingeleitet wird. Die in das hydrostatische Teilgetriebe 48 eingehende Leistung treibt beispielsweise, insbesondere fahrtrichtungsabhängig, den ersten Hydrostaten 28 an, welcher als Pumpe wirkt. Dieser erste Hydrostat 28 ist über eine erste Hydraulikleitung 52 und eine zweite Hydraulikleitung 54 hydraulisch mit dem zweiten Hydrostaten 54 verbunden, welcher dann als Motor wirkt, und die Leistung ebenfalls dem Antriebsstrang 26 bereitstellt. Durch die stufenlos verstellbaren Hydrostaten 28, 30, insbesondere in Weitwinkelbauweise, wird die stufenlose Regelung der Getriebeübersetzung ermöglicht.

Das Abtriebsdrehmoment M_{A} des hydraulisch-mechanisch stufenlosen Getriebes 24, insbesondere dessen Richtung und/oder Größe, kann durch Drucksensoren 58, 60 ermittelt werden, welche an den Hydraulikleitungen 52, 54 angeordnet sind, welche die Hydrostaten 28, 30 hydraulisch verbinden. Ein erster Drucksensor 58 ist dabei an der ersten Hydraulikleitung 52 angeordnet, und ein zweiter Drucksensor 60 an der zweiten Hydraulikleitung 54. Liegt kein Schubbetrieb vor, so ist beispielsweise der Druck P₁ in der ersten Hydraulikleitung 54 größer als der Druck P₂ in der zweiten Hydraulikleitung 54. Dieses Druckverhältnis kehrt sich um, sobald Schubbetrieb eintritt, so dass im Schubbetrieb, bei unveränderter Fahrtrichtung, der Druck P₂ größer ist als der Druck P₁. Die Größe der Druckdifferenz entspricht dabei der Größe des Abtriebsdrehmomentes M_{A} an dem Ausgang des Getriebes 24. Dadurch sind anhand der Druckdifferenz in den Hydraulikleitungen 52, 54 sowohl das Vorliegen eines Schubbetriebs als auch dessen Größe bestimmbar. Dies ist ebenfalls denkbar bei einem stufenlosen hydraulisch-mechanischen Getriebe 24 mit Hydrostaten in sogenannter back-to-back Bauweise. Bei einem mechanischen oder hydrostatischen stufenlosen Getriebe 24 und/oder einem Lastschaltgetriebe kann beispielsweise das Stützmoment Mst des Getriebes 24 als Getriebeparameter ermittelt werden. Das Stützmoment Mst, welches beispielsweise von einer Drehzahl des Antriebsmotors 22, einer Getriebeübersetzung und/oder einem Getriebewirkungsgrad abhängig ist, kann mittels einer Kennlinie, insbesondere einer Schleppkennlinie, bestimmt werden. Das Stützmoment Mst ist dabei die Differenz zwischen dem Antriebsdrehmoment und dem Abtriebsdrehmoment M_{A} des Getriebes 24. Die Drehzahl des Antriebsmotors 22 ist mittels eines ersten Drehzahlsensors 62, beispielsweise an einer Eingangswelle des Getriebes 24 messbar. Durch einen zweiten Drehzahlsensor 64 an der Abtriebswelle des Getriebes 24 kann die Abtriebsdrehzahl nₐ und damit zusammen mit der Eingangsdrehzahl nᵢ bzw. Drehzahl nᵢ des Antriebsmotors 22 die Getriebeübersetzung ermittelt werden.

Als Betriebsparameter kann ebenfalls der Schlupf von Bodeneingriffsmitteln 20 des Zuges 10 ermittelt werden. Dies kann beispielsweise durch Drehzahlsensoren an den Bodeneingriffsmitteln 20 erfolgen, die mit der Steuervorrichtung 42 verbindbar sind. Zudem sind durch Radkraft- oder Raddrehmomentsensorik, welche beispielsweise jeweils einem Bodeneingriffsmittel zugeordnet sein können, ermittelte Kräfte und Momente als Betriebsparameter zur Ermittlung eines Schubbetriebs, insbesondere als Führungsgröße für eine Betätigung einer Bremsanlage 32 eines Anhängers 14, nutzbar. Dies hat den Vorteil, dass die aktuellen Kraftschlussbedingungen ermittelt und bewertet und der Steuervorrichtung 42 bereitgestellt werden können.

Zur Vermeidung von einer kritischen Fahrsituation im Schubbetrieb sind eine oder mehrere Bremsanlagen 32, 34 in Abhängigkeit des ermittelten Schubbetriebs durch die Steuervorrichtung 42 betätigbar. Hierbei können Bremsanlagen 32 eines oder, sofern vorhanden, mehrerer Anhänger 14 unabhängig von der zweiten Bremsanlage 34 des Zugfahrzeuges 12 durch die Steuervorrichtung 42 betätigt werden. Hierdurch wird eine Verzögerung des Anhängers 14 und eine Verringerung des Schubes auf das Zugfahrzeug 12, wodurch eine Streckung des Zuges 10 bewirkt wird und ein kritischer Fahrzustand des Zuges 10 vermieden werden kann.

Eine kritische Fahrsituation, insbesondere ab der eine Betätigung einer Bremsanlage 32, 34 des Zuges 10 erforderlich ist, kann durch die Steuervorrichtung 42 beispielsweise durch einen Vergleich eines oder mehrerer Betriebsparameter mit in der Steuervorrichtung 42 hinterlegten Referenz- oder Grenzwerten der Betriebsparameter erfolgen. Eine Betätigung einer Bremsanlage 32, 34 kann dabei auch vor Erreichen einer kritischen Fahrsituation erfolgen. Ein Zeitpunkt und/oder eine Dauer zur automatischen Betätigung einer Bremsanlage 32, 34 ist somit durch die Steuervorrichtung 42 bestimmbar. Hierbei können durch die Steuervorrichtung 42 auch vorgegebene Parameter, beispielsweise aufgrund gesetzlicher Regelungen, berücksichtigt werden, wie eine Art und/oder Dauer der Betätigung.

Die Steuervorrichtung 42 kann eine, insbesondere erste, Bremsanlage 32, 34 proportional, beispielsweise zur Größe des ermittelten Schubes bzw. Schubmomentes, und/oder digital betätigen. Denkbar ist auch eine dauerhafte Betätigung, beispielsweise mit variierbarem Bremsdruck, und/oder eine zeitweise, beispielsweise intervallartige oder gepulste, Betätigung, bei welcher beispielsweise eine Betätigung der Bremsanlage 32, 34 in gleichmäßigen oder unterschiedlichen Zeitintervallen mit einer gleichbleibenden oder unterschiedlichen Bremskraft erfolgen kann. Die Bremsen 36 der Bremsanlage 32, 34 sind dabei gleichzeitig, achsweise und/oder einzeln durch die Steuervorrichtung 42 betätigbar. Eine Betätigung einer ersten Bremsanlage 32 eines mehrachsigen Anhängers 14 kann dabei derart erfolgen, dass die Bremsen 36 an den Anhängerachsen 38 und/oder Bodeneingriffsmitteln 20 jeweils achsweise alternierend betätigt werden, so dass der Anhänger 14 kontinuierlich verzögert wird. Bei einem Zug 10 mit mehreren Anhängern 14 sind die Bremsen 36 der Bremsanlagen 32, insbesondere an den Anhängerachsen 38 und/oder Bodeneingriffsmitteln 20, jeweils achsweise alternierend betätigbar. Hierbei sind auch Bremsen 36 an Anhängerachsen 38 unterschiedlicher Anhänger 14 alternierend betätigbar.

### Bezugszeichenliste

- 10: Landwirtschaftlicher Zug
- 12: Zugfahrzeug
- 14: Anhänger
- 16: Vorderachse
- 18: Hinterachse
- 20: Bodeneingriffsmittel
- 22: Antriebsmotor
- 24: Getriebe
- 26: Antriebsstrang
- 28: erster Hydrostat
- 30: zweiter Hydrostat
- 32: erste Bremsanlage
- 34: zweite Bremsanlage
- 36: Bremse
- 38: Anhängerachse
- 40: Anhängerbremsventil
- 42: Steuervorrichtung
- 44: Fahrerkabine
- 46: mechanisches Teilgetriebe
- 48: hydrostatisches Teilgetriebe
- 50: Planetengetriebe
- 52: erste Hydraulikleitung
- 54: zweite Hydraulikleitung
- 56: Kupplung
- 58: erster Drucksensor
- 60: zweiter Drucksensor
- 62: erster Drehzahlsensor
- 64: zweiter Drehzahlsensor
- 66: Bremsleitung
- 68: Geschwindigkeitsregelanlage

- P₁: Druck in erster Hydraulikleitung
- P₂: Druck in zweiter Hydraulikleitung
- M_{A}: Abtriebsdrehmoment
- M_{St}: Stützmoment
- nᵢ: Motordrehzahl/ Eingangsdrehzahl
- nₐ: Ausgangsdrehzahl
- F: Kraft

## Patentansprüche

1. Landwirtschaftlicher Zug mit einem Zugfahrzeug (12), insbesondere einem Traktor, und mindestens einem an das Zugfahrzeug (12) gekoppelten Anhänger (14), wobei der mindestens eine Anhänger (14) eine erste Bremsanlage (32) aufweist, und wobei das Zugfahrzeug (12), welches über einen mit einem Getriebe (24) zusammenwirkenden Antriebsmotor (22) antreibbar ist, eine zweite Bremsanlage (34) und eine Steuervorrichtung (42) zur Steuerung und/oder Regelung mindestens einer Bremsanlage (32, 34) des landwirtschaftlichen Zuges (10) aufweist, wobei die Steuervorrichtung (42) derart ausgebildet und eingerichtet ist, dass mindestens eine Bremsanlage (32, 34) des Zuges (10) in Abhängigkeit eines ermittelten Schubbetriebes des Zuges (10) und/oder Zugfahrzeuges (12) betätigbar ist, wobei der Schubbetrieb in Abhängigkeit mindestens eines Betriebsparameters des landwirtschaftlichen Zuges (10) ermittelbar ist,
**dadurch gekennzeichnet, dass** der mindestens eine Betriebsparameter ein Getriebeparameter in Form eines an dem, insbesondere stufenlosen, Getriebe (24) wirkenden Abtriebsdrehmomentes (MA) und/oder Stützmomentes (MSt) ist.

2. Landwirtschaftlicher Zug nach Anspruch 1, **dadurch gekennzeichnet, dass** ein Betriebsparameter eine auf das oder an dem Zugfahrzeug (12) wirkende Kraft (F), ein Moment, eine Motordrehzahl (nᵢ) und/oder ein Schlupf von Bodeneingriffsmitteln (20) des Zuges (10) ist.

3. Landwirtschaftliches Fahrzeug nach Anspruch 1, **dadurch gekennzeichnet, dass** das Abtriebsdrehmoment (M_{A}) und/oder Stützmoment (M_{St}) eines stufenlosen Getriebes (24) aus einer Druckdifferenz in einem hydrostatischen Teilgetriebe (48) des Getriebes (24) bestimmbar ist.

4. Landwirtschaftlicher Zug nach einem der vorherigen Ansprüche, **dadurch gekennzeichnet, dass** die Bremsanlage (32) eines Anhängers (14) durch die Steuervorrichtung (42) zu bestimmbaren Zeitpunkten und für bestimmbare Dauer betätigbar ist.

5. Landwirtschaftlicher Zug nach einem der vorherigen Ansprüche, **dadurch gekennzeichnet, dass** bei einem Zug (10) mit mehreren bremsbaren Anhängern (14) die Bremsanlagen (32) der Anhänger (14) gleichzeitig und/oder unabhängig voneinander betätigbar sind.

6. Landwirtschaftlicher Zug nach einem der vorherigen Ansprüche, **dadurch gekennzeichnet, dass** an einem Anhänger (14) angeordnete Bodeneingriffsmittel (20) durch die zugeordnete Bremsanlage (32) gemeinsam, achsweise und/oder einzeln bremsbar sind.

7. Landwirtschaftlicher Zug nach einem der vorherigen Ansprüche, **dadurch gekennzeichnet, dass** Betätigung mindestens einer Bremsanlage (32, 34) des Zuges (10) in Abhängigkeit einer Anzahl der Anhänger (14), der Anhängerart, des jeweiligen Anhängergewichtes und/oder der jeweiligen Anhängerbremsleistung erfolgt.

8. Landwirtschaftlicher Zug nach einem der vorherigen Ansprüche, **dadurch gekennzeichnet, dass** eine Geschwindigkeitsregelanlage (68) vorgesehen ist, welche mit der Steuervorrichtung (42) in Signalverbindung steht.

9. Verfahren zur Betätigung mindestens einer Bremsanlage (32, 34) eines landwirtschaftlichen Zuges (10), insbesondere gemäß Anspruch 1, mit einem Zugfahrzeug (12), insbesondere einem Traktor, und mindestens einem an das Zugfahrzeug (12) gekoppelten Anhänger (14), wobei der mindestens eine Anhänger (14) eine erste Bremsanlage (32) aufweist, und wobei das Zugfahrzeug (12), welches über einen mit einem, insbesondere stufenlosen, Getriebe (24) zusammenwirkenden Antriebsmotor (22) antreibbar ist, eine zweite Bremsanlage (34) und eine Steuervorrichtung (42) zur Steuerung und/oder Regelung mindestens einer Bremsanlage (32, 34) des landwirtschaftlichen Zuges (10) aufweist, wobei die Steuervorrichtung (42) mindestens eine Bremsanlage (32, 34) des Zuges (10) in Abhängigkeit eines ermittelten Schubbetriebes des Zuges (10) und/oder Zugfahrzeuges (12) betätigt, wobei der Schubbetrieb in Abhängigkeit mindestens eines Betriebsparameters des landwirtschaftlichen Zuges (10) ermittelt wird,
**dadurch gekennzeichnet, dass**
der mindestens eine Betriebsparameter ein Getriebeparameter in Form eines an dem, insbesondere stufenlosen, Getriebe (24) wirkenden Abtriebsdrehmomentes (MA) und/oder Stützmomentes (MSt) ist.

10. Verfahren nach Anspruch 9, **dadurch gekennzeichnet, dass** als ein Betriebsparameter eine auf das oder an dem Zugfahrzeug (12) wirkende Kraft (F), ein Moment, eine Motordrehzahl (nᵢ) und/oder ein Schlupf von Bodeneingriffsmitteln (20) des Zuges (10) verwendet wird

11. Verfahren nach Anspruch 9 oder 10, **dadurch gekennzeichnet, dass** ein Getriebeparameter in Form eines an einem hydraulisch-mechanischen stufenlosen Getriebe (24) wirkenden Abtriebsdrehmomentes (M_{A}) aus einer Druckdifferenz in einem hydrostatischen Teilgetriebe (48) des Getriebes (24) bestimmt wird.

## Claims

1. An agricultural vehicle combination having a traction vehicle (12), in particular a tractor, and at least one trailer (14) coupled to the traction vehicle (12), wherein the at least one trailer (14) comprises a first braking system (32), and wherein the traction vehicle (12), which can be driven via a propulsion engine (22) which cooperates with a transmission (24), comprises a second braking system (34) and a control device (42) for controlling and/or regulating at least one braking system (32, 34) of the agricultural vehicle combination (10), wherein the control device (42) is configured and constructed in a manner such that at least one braking system (32, 34) of the vehicle combination (10) can be actuated as a function of a determined engine braking operation of the vehicle combination (10) and/or traction vehicle (12), wherein the engine braking operation can be determined as a function of at least one operating parameter of the agricultural vehicle combination (10),
**characterized in that** the at least one operating parameter is a transmission parameter in the form of an output torque (M_{A}) and/or drag torque (Mst) acting on the transmission (24), which in particular is a continuously variable transmission.

2. The agricultural vehicle combination according to claim 1, **characterized in that** an operating parameter is a force (F), a torque, an engine speed (nᵢ) and/or a slippage of ground engaging means (20) of the vehicle combination (10) acting on or upon the traction vehicle (12).

3. The agricultural vehicle combination according to claim 1, **characterized in that** the output torque (M_{A}) and/or drag torque (Mst) of a continuously variable transmission (24) can be determined from a pressure difference in a hydrostatic sub-transmission (48) of the transmission (24).

4. The agricultural vehicle combination according to one of the preceding claims, **characterized in that** the braking system (32) of a trailer (14) can be actuated by means of the control device (42) at specifiable points in time and for specifiable intervals of time.

5. The agricultural vehicle combination according to one of the preceding claims, **characterized in that** for a vehicle combination (10) having a plurality of trailers (14) which can be braked, the braking systems (32) of the trailer (14) can be actuated simultaneously and/or independently of each other.

6. The agricultural vehicle combination according to one of the preceding claims, **characterized in that** ground engaging means (20) disposed on a trailer (14) can be braked by means of the associated braking system (32) together, per axle and/or individually.

7. The agricultural vehicle combination according to one of the preceding claims, **characterized in that** actuation of at least one braking system (32, 34) of the vehicle combination (10) is carried out as a function of a number of the trailers (14), the type of trailer, the respective weight of the trailer and/or the respective braking power of the trailer.

8. The agricultural vehicle combination according to one of the preceding claims, **characterized in that** a speed regulation system (68) is provided which is in signalling communication with the control device (42).

9. A method for actuating at least one braking system (32, 34) of an agricultural vehicle combination (10), in particular in accordance with claim 1, having a traction vehicle (12), in particular a tractor, and at least one trailer (14) coupled to the traction vehicle (12), wherein the at least one trailer (14) comprises a first braking system (32), and wherein the traction vehicle (12), which can be driven via a propulsion engine (22) which cooperates with a transmission (24), which in particular is continuously variable, comprises a second braking system (34) and a control device (42) for controlling and/or regulating at least one braking system (32, 34) of the agricultural vehicle combination (10), wherein the control device (42) actuates at least one braking system (32, 34) of the vehicle combination (10) as a function of a determined engine braking operation of the vehicle combination (10) and/or traction vehicle (12), wherein the engine braking operation is determined as a function of at least one operating parameter of the agricultural vehicle combination (10),
**characterized in that**
the at least one operating parameter is a transmission parameter in the form of an output torque (M_{A}) and/or drag torque (M_{St}) acting on the transmission (24), which in particular is a continuously variable transmission.

10. The method according to claim 9, **characterized in that** a force (F), a torque, an engine speed (nᵢ) and/or a slippage of ground engaging means (20) of the vehicle combination (10) acting on or upon the traction vehicle (12) is used as an operating parameter.

11. The method according to claim 9 or claim 10, **characterized in that** an operating parameter in the form of an output torque (M_{A}) acting on a hydraulic mechanical continuously variable transmission (24) is determined from a pressure difference in a hydrostatic sub-transmission (48) of the transmission (24).

## Revendications

1. Attelage agricole comprenant un véhicule de traction (12), en particulier un tracteur, et au moins une remorque (14) couplée au véhicule de traction (12), la au moins une remorque (14) comportant une première installation de freinage (32), et le véhicule de traction (12), lequel est entraînable par l'intermédiaire d'un moteur d'entraînement (22) coopérant avec une transmission (24), comportant une seconde installation de freinage (34) et un dispositif de commande (42) pour commander et/ou réguler au moins une installation de freinage (32, 34) de l'attelage agricole (10), le dispositif de commande (42) étant conçu et agencé de façon qu'au moins une installation de freinage (32, 34) de l'attelage (10) soit actionnable en fonction d'un roulement en poussée déterminé de l'attelage (10) et/ou du véhicule de traction (12), le roulement en poussée étant déterminable en fonction d'au moins un paramètre de fonctionnement de l'attelage agricole (10), **caractérisé en ce que** le au moins un paramètre de fonctionnement est un paramètre de transmission en forme de couple de sortie (MA) et/ou de couple d'appui de remorque (MSt) agissant sur la transmission (24), en particulier automatique à fonctionnement continu.

2. Attelage agricole selon la revendication 1, **caractérisé en ce qu'**un paramètre de fonctionnement est une force (F) agissant sur le ou au niveau du véhicule de traction (12), un couple, un régime du moteur (nᵢ) et/ou un glissement de moyens de prise au sol (20) de l'attelage (10).

3. Véhicule agricole selon la revendication 1, **caractérisé en ce que** le couple de sortie (M_{A}) et/ou le couple d'appui de remorque (Mst) d'une transmission automatique à fonctionnement continu (24) est déterminable à partir de la différence de pression dans une transmission partielle hydrostatique (48) de la transmission (24).

4. Attelage agricole selon une des revendications précédentes, **caractérisé en ce que** l'installation de freinage (32) d'une remorque (14) est actionnable par l'intermédiaire du dispositif de commande (42) à des instants déterminables et pour une durée déterminable.

5. Attelage agricole selon une des revendications précédentes, **caractérisé en ce qu'**en présence d'un attelage (10) à plusieurs remorques freinables (14), les installations de freinage (32) des remorques (14) sont actionnables simultanément et/ou indépendamment les unes des autres.

6. Attelage agricole selon une des revendications précédentes, **caractérisé en ce que** des moyens de prise au sol (20) disposés sur une remorque (14) sont freinables conjointement, essieu par essieu et/ou individuellement par l'intermédiaire de l'installation de freinage associée (32).

7. Attelage agricole selon une des revendications précédentes, **caractérisé en ce que** l'actionnement d'au moins une installation de freinage (32, 34) de l'attelage (10) s'effectue en fonction d'un nombre de remorques (14), du type de remorque, du poids respectif des remorques et/ou de la puissance de freinage respective des remorques.

8. Attelage agricole selon une des revendications précédentes, **caractérisé en ce qu'**il est prévu une installation de régulation de vitesse (68) qui est en en liaison signalétique avec le dispositif de commande (42).

9. Procédé d'actionnement d'au moins une installation de freinage (32, 34) d'un attelage agricole (10), en particulier selon la revendication 1, comprenant un véhicule de traction (12), en particulier un tracteur, et au moins une remorque (14) couplée au véhicule de traction (12), la au moins une remorque (14) comportant une première installation de freinage (32), et le véhicule de traction (12), lequel est entraînable par l'intermédiaire d'un moteur d'entraînement (22) coopérant avec une transmission (24), comportant une seconde installation de freinage (34) et un dispositif de commande (42) pour commander et/ou réguler au moins une installation de freinage (32, 34) de l'attelage agricole (10), le dispositif de commande (42) actionnant au moins une installation de freinage (32, 34) de l'attelage (10) en fonction d'un roulement en poussée déterminé de l'attelage (10) et/ou du véhicule de traction (12), le roulement en poussée étant déterminé en fonction d'au moins un paramètre de fonctionnement de l'attelage agricole (10), **caractérisé en ce que** le au moins un paramètre de fonctionnement est un paramètre de transmission en forme de couple de sortie (MA) et/ou de couple d'appui de remorque (MSt) agissant sur la transmission (24), en particulier automatique à fonctionnement continu.

10. Procédé selon la revendication 9, **caractérisé en ce qu'**une force (F) agissant sur le ou au niveau du véhicule de traction (12), un couple, un régime du moteur (nᵢ) et/ou un glissement de moyens de prise au sol (20) de l'attelage (10) est employé comme paramètre de fonctionnement.

11. Procédé selon la revendication 9 ou 10, **caractérisé en ce qu'**un paramètre de transmission en forme de couple de sortie (M_{A}) agissant sur une transmission automatique hydromécanique à fonctionnement continu (24) est déterminé à partir d'une différence de pression dans une transmission partielle hydrostatique (48) de la transmission (24).
